# EUROPÄISCHE PATENTANMELDUNG

(11) **EP 0 850 964 A1**
(43) Veröffentlichungstag der Anmeldung: **01.07.1998**
(21) Anmeldenummer: 97122261.7
(22) Anmeldetag: 17.12.1997
(51) Int. Cl.: C08G 18/12, C08G 18/58, C08G 18/76

(54) **Oxazolidin- und Urethangruppen enthaltende, unter Druck stehende isocyanatterminierte Prepolymere für Einkomponenten-Schäume**

(30) Priorität: 23.12.1996 DE 19654149
(71) Anmelder: BASF AKTIENGESELLSCHAFT, 67056 Ludwigshafen (DE)
(72) Erfinder: Reese, Hans-Juergen, 82140 Olching (DE); Wild, Heike, 85416 Langenbach (DE); Forster, Heinz, 82515 Wolfratshausen (DE)

(57) **Zusammenfassung**

Oxazolidon- und Urethangruppen enthaltendes, unter Druck stehendes, Treibmittel enthaltendes Isocyanatterminiertes Prepolymer, herstellbar durch Umsetzung einer Isocyanatkomponenten mit einer Polyolkomponente, dadurch gekennzeichnet, dass als Isocyanatkomponente (A) ein endständige Isocyanatgruppen enthaltendes Reaktionsprodukt aus mindestens einem Isocyanat mit mindestens zwei Isocyanatgruppen im Molekül mit einem Gemisch aus mindestens einer Verbindung mit mindestens zwei mit Isocyanat reaktiven funktionellen Gruppen und mindestens einer Epoxidgruppe im Molekül und einem Polyesterpolyol und als Polyolkomponente (B) mindestens ein mit primären Hydroxylgruppen terminierter Polyether mit einer Funktionalität ≥2 eingesetzt wird.

## Beschreibung

Die Erfindung betrifft Oxazolidon- und Urethangruppen enthaltende, unter Druck stehende isocyanatterminierte Prepolymere, die zu Einkomponenten-Polyurethanschäumen verarbeitet werden können.

Einkomponenten-Polyurethanschaume, auch als Ortsschaume bezeichnet, sind häufig angewendete Montagemittel, die hauptsächlich im Bauwesen, beispielsweise zum Einbau von Türen und Fenstern in Bauwerken oder als Füllmaterial für bautechnisch bedingte Hohlräume oder Mauerdurchbrüche für Rohrinstallationen Anwendung finden.

Die Ortsschäume entstehen durch Austragen von in Druckbehältern vorliegenden isocyanatterminierten Prepolymeren mittels Treibmittel, deren Aufschäumen durch Frothwirkung und Aushärtung durch Luftfeuchtigkeit.

Zur Herstellung der unter Druck stehende Prepolymere sind zwei prinzipielle Herstellungsverfahren bekannt:
1. Die Isocyanatkomponente und die Polyolkomponente werden im gewünschten Verhältnis in das Druckgefäß eingefüllt, dieses verschlossen und das Treibmittel aufgepreßt. In einer Schüttel- oder Taumelanlage werden das sich bildende Prepolymer und das Treibmittel intensiv miteinander gemischt.
2. In einem Reaktor wird aus der Isocyanat- und der Polyolkomponente das Prepolymer gebildet, in die Druckbehälter gefüllt, diese verschlossen und das Treibmittel aufgepreßt. In einer Schüttel- oder Taumelanlage wird das Prepolymer mit dem Treibmittel intensiv gemischt.

Um eine optimale Verteilung des Schaumes in den auszuschäumenden Fingen und Hohlräumen zu bewirken, ist eine niedrige Viskosität der Prepolymeren anzustreben. In der Vergangenheit trugen die als Treibmittel gebräuchlichen Fluorchlorkohlenwasserstoffe zu einer Viskositätserniedrigung bei. Da ein weiterer Einsatz derartiger Verbindungen aus Umweltschutzgründen nicht möglich ist, wurden vielfach, wie beispielsweise in DE-A-4 025 843 oder EP-A-480 342 beschrieben, den Prepolymeren Weichmacher oder Lösungsmittel zugesetzt. Die Mitverwendung derartiger Verbindungen führt jedoch, da sie nicht in den Schaum eingebaut werden, zu einem starken Schrumpf der Schäume. Auch in DE-A-33 17 193, DE-A-39 11 784 und DE-A-38 29 104 wird der Zusatz von Verbindungen, die die Viskosität der Prepolymeren erniedrigen sollen, beschrieben. Doch auch dabei kommt es zu einem starken Schrumpf und zu einer Versprödung der Schäume.

Darüberhinaus waren bei den Schäumen des Standes der Technik für die beiden Möglichkeiten des Austrags des Ortsschaums aus der Aerosoldose, den Austrag über eine Schäumpistole und den Austrag über ein Schäumrohr, üblicherweise als Winkelstückaustrag bezeichnet, unterschiedliche Anforderungen an den Schaum zu beachten, insbesondere beim Verhältnis von offenen zu geschlossenen Zellen.

So läßt ein üblicher, weitgehend geschlossenzelliger Schaum nur eine Pistolenverarbeitung zu, während er bei Winkelstückverarbeitung einen zusätzlichen und damit zu starken Schrumpf aufweisen würde. Andererseits ist ein weitgehend offenzelliger Schaum nur über Winkelstückaustrag befriedigend verarbeitbar, während er bei einem Austrag mittels Pistole zu grobblasig würde.

Aus diesem Grund wurden bisher spezielle Schaumformulierungen für die beiden Austragsarten hergestellt.

Aufgabe der Erfindung war es, ein Prepolymer für Polyurethan-Einkomponentenschaumstoffe bereitzustellen, das aufgrund seiner niedrigen Viskosität gut verarbeitbar ist und zu Schaumstoffen mit geringem Schrumpf, einem optimalen Verhältnis von offenen zu geschlossenen Zellen und verbesserten mechanischen Eigenschaften verarbeitet werden kann und einen Austrag sowohl über Pistole als auch über Winkelstück zuläßt.

Die Aufgabe konnte überraschenderweise gelöst werden durch ein Oxazolidon- und Urethangruppen enthaltendes isocyanatterminiertes Prepolymer, herstellbar durch Umsetzung einer Isocyanatkomponente und einer Polyolkomponente, dadurch gekennzeichnet, dass als Isocyanatkomponente (A) ein endständige Isocyanatgruppen enthaltendes Reaktionsprodukt aus mindestens einem Isocyanat mit mindestens zwei Isocyanatgruppen im Molekül mit einem Gemisch aus mindestens einer Verbindung mit mindestens zwei mit Isocyanat reaktiven Gruppen und mindestens einer Epoxidgruppe im Molekül und mindestens einem Polyesterpolyol und als Polyolkomponente (B) mindestens ein mit primären Hydroxylgruppen terminierter Polyether mit einer Funktionalität ≥ 2 eingesetzt wird.

Gegenstand der Erfindung sind demzufolge Oxazolidon- und Urethangruppen enthaltende isocyanatterminierte Prepolymere wie oben beschrieben.

Gegenstand der Erfindung sind weiterhin die Herstellung der isocyanatterminierten Prepolymeren, ihre Verwendung zur Herstellung von Polyurethan-Einkomponentenschaumstoffen sowie die Polyurethan-Einkomponentenschaumstoffe.

Zur erfindungsgemäß verwendeten Isocyanatkomponenten (A) und ihren Aufbaukomponenten ist folgendes zu sagen:

Als Isocyanate mit mindestens zwei Isocyanatgruppen im Molekül können die üblichen und bekannten Di- und Polyisocyanate eingesetzt werden, beispielsweise aliphatische Isocyanate, wie 1,6-Hexamethylendiisocyanat (HDI), Isophorondiisocyanat, aromatische Isocyanate wie Toluylendiisocyanat (TDI), Diphenylmethandiisocyanat (MDI) und Gemische aus Diphenylmethandiisocyanat und Polyphenylen-polymethylen-polyisocyanaten (Roh-MDI). Die Isocyanate könne auch durch Einbau von beispielsweise Uretdion-, Isocyanurat- und Allophanatgruppen modifiziert sein.

Vorzugsweise wird für Polyurethan-Einkomponentenschaum Roh-MDI verwendet.

Die erfindungsgemäß verwendeten Polyesterpolyole werden auf bekannte Weise durch Polykondensation von mehrfunktionellen Carbonsäuren mit mehrfunktionellen Alkoholen hergestellt. Derartige Produkte werden beispielsweise im Kunststoff -Handbuch, Band 7, "Polyurethane", herausgegeben von Günter Oertel, Carl-Hauser-Verlag München, 3. Auflage 1993, Seiten 67 bis 74, beschrieben.

Besonders vorteilhaft für die Herstellung der erfindungsgemäßen Prepolymere sind Polyesterpolyole aus difunktionellen Carbonsäuren, insbesondere aliphatischen Dicarbonsäuren, mit Diolen. Als besonders geeignet haben sich Polyesterole auf Basis von Adipinsäure und Diethylenglykol erwiesen. Das Molekulargewicht der Polyesterole sollte dabei zwischen 100 und 2.000 g/mol (Gewichtsmittel) liegen. Bei zu hohen Molekulargewichten steigt die Viskosität der Polyesterole zu stark an.

Als Verbindungen mit mindestens zwei mit Isocyanat reaktiven Gruppen und mindestens einer Epoxidgruppe im Molekül können epoxidierte Naturstoffpolyole, wie epoxidiertes Sojaöl, insbesondere jedoch epoxidierte Polybutadiendiole verwendet werden. Das Molekulargewicht sollte 600 bis 4.000 g/mol (Gewichtsmittel) betragen, da sie sich in diesem Gewichtsbereich trotz ihrer Unverträglichkeit mit dem Polyesterpolyol in das urethan/oxazolidon-modifizierte Isocyanat unter Ausbildung von Oxazolidon-Strukturen einbauen lassen.

Vorzugsweise werden das Polyesterpolyol und die epoxidierte Verbindung in einem Gewichtsverhältnis von 100:1 bis 1:100, insbesondere von 50:1 bis 1:5 eingesetzt. Weiterhin hat es sich als günstig erwiesen, das Gemisch aus Polyesterpolyol und epoxidierter Verbindung in einer Menge von 0,1 bis 20 Gew.-%, vorzugsweise 2 bis 10 Gew.-%, bezogen auf das eingesetzte Isocyanat, einzusetzen.

Das wie beschreiben mit Oxazolidon- und Urethangruppen modifizierte Polyisocyanat wird mit der Polyolkomponente (B) zum erfindungsgemäßen Prepolymer umgesetzt. Erfindungsgemäß enthält die Polyolkomponente mindestens einen hochmolekularen mit primären Hydroxylgruppen terminierten Polyether der Funktionalität ≥2 und einem Molekulargewicht >1.500 g/mol, vorzugsweise 3.000 bis 20.000 g/mol. Diese mit primären OH-Gruppen versehenen Polyetherpolyole mit hohem Molekulargewicht sind besonders vorteilhaft, da sie als reaktive Polyole hochmolekulare Umsetzungsprodukte bilden und damit beim ausgehärteten Einkomponentenschaum neben guten Elastizitätsverhalten eine optimale Tieftemperaturhärtung ohne Versprödung bewirken.

Besonders geeignet sind im Bereich der reinen Polyetherpolyole oben genannter Charakteristik Polyethylenglykole. Diese werden in Kombination mit üblichen Polyhydroxyverbindungen und Zusätzen so eingesetzt, daß sie trotz ihres Schmelzpunktes über 20°C eine bei Raumtemperatur flüssige Polyolkomponente ergeben. Neben den genannten Vorteilen ergeben sich bei der Verwendung dieser Polyetherpolyole zusätzliche Vorteile durch ihre physikalisch zellöffnend wirkenden hochmolekularen Umsetzungsprodukte mit dem Isocyanat in der Aerosoldose. Zu den reinen Polyetherpolyolen mit hohem Molekulargewicht und primeren OH-Gruppen gehören auch die Mischalkylenoxydpolyether. Hierbei sind die Polyole geeignet, bei deren Herstellung Ethylenoxyd als letzte Zugabe primäre OH-Gruppen erzeugt.

Besonders geeignet sind auch Polyetherpolyole der genannten Charakterisierung, welche als Starter ein Polyesterpolyol verwenden und hier insbesondere Fettsäureester mit OH-Funktionalität.

Besonders geeignet ist ethoxyliertes Rizinusöl, das auch partiell propoxyliert sein kann. Das mittlere Molekulargewicht (Gewichtsmittel) beträgt vorzugsweise >1.500 g/mol, insbesondere 1.500 bis 8.000 g/mol. Höhere Molekulargewichte führen zu erhöhter Viskosität der Prepolymere.

Neben den ethoxylierten Fettsäureestern enthält die Polyolkomponente die für die Herstellung von Polyurethan-Hartschäumen üblichen hydroxyfunktionellen Verbindungen, zumeist Polyether- und/oder Polyesterpolyole, wie sie z.B. im Kunststoff-Handbuch, a.a.O. beschrieben sind, sowie gegebenenfalls kurzkettige Diole, wie Ethylenglykol, Propylenglykol, Butandiol-1,4 als Kettenverlängerer, kurzkettige mindestens dreifunktionelle Alkohole wie Glyzerin oder Trimethylolpropan als Vernetzer, sowie Katalysatoren und gegebenenfalls Stabilisatoren, Farbstoffe und/oder Monoole als Molekulargewichtsregler.

Als Katalysatoren werden vorzugsweise stark basische Amine oder organische Metallverbindungen, insbesondere Zinnverbindungen oder synergistisch wirkende Mischungen aus stark basischen Aminen und organischen Metallverbindungen verwendet. Als stark basische Amine seien beispielhaft genannt: Amidine wie z.B. 2,3-Dimethyl-3,4,5,6-tetrahydropyrimidin, Tris-(dialkylaminoalkyl)-s-hexahydrotriazine wie z.B. Tris-(N,N-dimethylaminopropyl)-s-hexahydrotriazin, vorzugsweise jedoch tertiäre Amine wie z.B. Triethylamin, Tributylamin, Dimethylbenzylamin, N-Methyl-, N-Ethyl-, N-Cyclohexylmorpholin, Dimorpholino-diethylether, N,N,N',N'-Tetramethylethylendiamin, N,N,N',N'-Tetramethylbutandiamin, N,N,N',N'-Tetramethyl-hexandiamin-1,6, Pentamethyldiethylentriamin, Tetramethyl-diaminoethylether, Bis-(di-methylaminopropyl)-harnstoff, Dimethylpiperazin, 1,2-Dimethylimidazol, Di-(4-N,N-dimethylaminocyclohexyl)methan, 1-Aza-bicyclo(3,3,0)-octan und 1,4-Diaza-bicyclo(2,2,2)-octan.

Als organische Zinnverbindungen kommen z.B. in Betracht: Zinn-(II)-salze von organischen Carbonsäuren, wie Zinn-(II)-diacetat, Zinn(II)-dioctoat, Zinn-(II)-diethylhexoat und Zinn-(II)dilaurat, sowie Dialkyl-zinn-(IV)-salze von Carbonsäuren, wie z.B. Dibutylzinn-diacetat, Dibutylzinn-dilaurat, Dibutylzinn-maleat, Dibutylzinn-dimercaptid und Dioctylzinn-diacetat.

Besonders geeignete Stabilisatoren sind Siloxan-Oxyalkylencopolymere.

Das erfindungsgemäße Prepolymer befindet sich in einem Druckbehälter und ist in einem als Treibmittel fungierenden Flüssiggas oder Flüssiggasgemisch gelöst. Als Treibmittel eignen sich übliche Flüssiggase sowie andere Substanzen mit einem Siedepunkt von <50°C. Beispielhaft seien genannt:

Dimethylether, Propan, n- oder iso-Butan, Pentan, Methylisobutylether sowie halogenierte Kohlenwasserstoffe wie Dichlorfluormethan, Monofluortrichlormethan, Trifluortrichlorethan, Trifluormethan, 1,1-Dichlor-1-fluorethan, Monochlortrifluorethan, Monochlordifluorethan, Difluorethan, Dichlortrifluorethan, Monochlortetrafluorethan, Pentafluorethan, Tetrafluorethan, Dichlormonofluorethan.

Besonders geeignet sind Alkane sowie Mischungen aus Alkanen, fluorierten Alkanen und Dimethylether.

Die Herstellung der erfindungsgemäßen Prepolymeren erfolgt vorzugsweise in zwei Stufen: Zunächst wird das urethan-/oxazolidonmodifizierte Polyisocyanat hergestellt. Dazu werden die benötigten Mengen an Isocyanat vorgelegt und das Gemisch aus Polyesterol und epoxidiertem Polyol zudosiert. Da die beiden Verbindungen nicht miteinander mischbar sind, erfolgt ihr Zusatz vorzugsweise in Form einer Emulsion. Die Reaktion wird bei Temperaturen zwischen 60 und 110°C, vorzugsweise zwischen 80 und 90°C, unter Rühren durchgeführt. Nach etwa 2- bis 6-stundiger Reaktionszeit ist die Modifizierung abgeschlossen, und das Reaktionsgemisch wird auf Raumtemperatur abgekühlt.

Die Umsetzung der so hergestellten Isocyanatkomponente mit der Polyolkomponente kann nach zwei Möglichkeiten erfolgen:
1. Die Polyolkomponente wird in Aerosoldosen dosiert. Danach wird die Isocyanatkomponente zudosiert, die Aerosoldose mit einem Ventil verschlossen und das Treibmittel zudosiert. In einer nachfolgenden Schüttel- oder Taumelanlage werden die in der Aerosoldose vorhandenen Mischungsbestandteile intensiv vermischt und homogenisiert. Bei der nachfolgend einsetzenden Reaktion wird in den Aerosoldosen das Prepolymer gebildet. Nach ca. 24 Stunden Wärmelagerung bei etwa 50°C oder ca. 3 Tagen Lagerung bei Raumtemperatur ist der Schaum einsatzbereit.
2. In einem Reaktor wird die Isocyanatkomponente mit der Polyolkomponente zur Umsetzung gebracht, das Reaktionsgemisch in eine Aerosoldose gefüllt, diese mit einem Ventil verschlossen und das Treibmittel eingefüllt. Das weitere Vorgehen erfolgt wie oben beschrieben.

Das Gewichtsverhältnis von Polyolkomponente zu Isocyanatkomponente beträgt etwa 100:>140 bzw. einer Kennzahl von >400.

Das erfindungsgemäße Prepolymer hat gegenüber denen des Standes der Technik Vorteile:

Die eingebauten Oxazolidongruppen haben im Schaum eine zellöffnende Wirkung und vermindern somit den Schrumpf. Zum anderen wird die Löslichkeit des Umsetzungsprodukts in überschüssigem Isocyanat verbessert. Das ist insbesondere bei der Verwendung von epoxidiertem Polybutadiendiol überraschend, da diese Verbindung extrem hydrophob ist und sich normalerweise mit den übrigen Bestandteilen der Reaktionsmischung nicht mischt. Die resultierenden Schäume härten gut aus, haben sehr gute mechanische Eigenschaften, insbesondere zeigen sie keine Versprödung und besitzen ein hervorragendes Tieftemperaturverhalten.

Die Schäume können sowohl über eine Pistole als auch über ein Winkelstück aus dem Druckbehälter ausgetragen werden.

Die Erfindung soll an nachfolgenden Beispielen näher erläutert werden.

### Beispiele

### Beispiel 1

1.1 Herstellung des urethan-/oxazolidonmodifizierten Isocyanats
In einem Rührreaktor mit Heiz- und Kühleinrichtung sowie Temperaturmessvorrichtung wurden 95 kg eines Rohprodukt des Di-phenylmethandiisocyanats eingefüllt. In einem separaten Mischbehälter wurden 6 kg eines Adipinsäure/Diethylenglykol-Polyesteralkohols mit einem Molekulargewicht von 450 g/mol (OH-Zahl 250 mg KOH/g) mit 0,67 kg eines epoxidierten Polybutadiendiols mit einer OH-Zahl von 180 mg KOH/g vermischt. Die Mischung ergab eine stabile Emulsion der ansonsten nicht mischbaren Flüssigkeiten. 5 kg dieser Emulsion wurden bei laufendem Rührwerk dem Rohprodukt des Diphenylmethandiisocyanat zugesetzt und gründlich durchmischt. Danach wurde der Reaktorinhalt unter weiterem Rühren langsam auf ca. 80°C erwärmt. Nach Erreichung von 80°C wurde diese Temperatur ca. 2 h gehalten und das Reaktionsprodukt nachfolgend langsam auf Raumtemperatur abgekühlt. Das erhaltene urethan-/oxazolidonmodifizierte Isocyanat wies folgende Parameter auf:
- Isocyanatgehalt:: 28,7 % NCO
- Viskosität (25°C):: 350 mPa·s

1.2 Herstellung der Polyolkomponente
In einem Mischbehälter wurden nacheinander 1.750 g eines Polyesteralkohols auf Basis eines Dicarbonsäuregemisches (Glutarsäure, Bernsteinsäure, Adipinsäure) und Ethylenglykol der OH-Zahl 56 mg KOH/g, 300 g eines Polyetheralkohols auf Basis Saccharose/Pentaerythrit/Propylenoxid mit einer OH-Zahl von 410 mg KOH/g, 350 g eines Polyethers auf Basis Glyzerin/Propylenoxid/Ethylenoxid mit einer OH-Zahl von 35 mg KOH/g, 400 g eines Polyethylenglykols mit dem Molekulargewicht 600 g/mol, 325 g eines ethoxylierten Rizinusöls mit dem Molekulargewicht 4.200 g/mol (OH-Zahl von 40 mg KOH/g), 125 g eines Siloxanoxyalkylen-Copolymeren als Schaumstabilisator, 40 g Dimorpholinodiethylether, 10 g 4-methyl-4-hydroxy-pentan-2-on, 50 g Butandiol-1,4 sowie 1.650 g Trichlorpropylphosphat eingewogen und durch nachfolgende gründliche Durchmischung zu einer Polyolkomponente homogenisiert.
1.3 Herstellung der Prepolymeren in Aerosoldosen mit Universalventil
280 g der oben beschriebenen Polyolkomponente wurden in eine 1-l-Aerosoldose eingefüllt. Nach Zugabe von 434 g des urethan-/oxazolidonmodifizierten Rohprodukts des Diphenylmethandiisocyanats gemäß 1.1 wurde die Aerosoldose mit einem Universalventil verschlossen. Sofort nach dem Verschließen wurden durch das Ventil mittels einer Gasdosiervorrichtung nacheinander 40 g Dimethylether, 72 g Tetrafluorethan und 24 g eines aus 80 % Butan und 20 % Propan bestehenden Gasgemisches in die Aerosoldose gefüllt. Nach Dosierung jedes Einzelgases bzw. des Gasgemisches wurde der Inhalt der Aerosoldose durch intensives Schütteln homogenisiert. Nach 24 h Wärmelagerung bei 50°C war die Prepolymerreaktion soweit abgeschlossen, dass die Aerosoldose zur Herstellung des Einkomponenten-Schaumes geeignet war.
1.4 Herstellung der Einkomponenten-Schäume
Aus den oben beschriebenen Aerosoldosen wurden die Prepolymere zum einen mittels Pistole und zum anderen mittels Winkelstück ausgetragen. Dies geschah durch Montage der Aerosoldose auf die jeweilige Austragsvorrichtinng. Die ainsgetragenen Prepolymere zeigten sehr gute Frothwirkung und härteten mit der Luftfeuchtigkeit bzw. Feuchtigkeit aus dem Untergrund zu einem jeweils sehr gut in seiner Oberflächenbeschafffenheit strukturierten Schaum mit dünner Schäumhaut und sehr feiner Schaumzelle aus. Der ausgehärtete Einkomponentenschaum zeigte sehr gute mechanische Eigenschaften, wie nachfolgende Tabelle veranschaulicht.

| | Schäume nach Beispiel 1 | |
|---|---|---|
| | Pistolenaustrag | Winkelstückaustrag |
| Dichte in kg/m³ | 14 | 16 |
| Zugfestigkeit in N/cm² | 11,5 | 12 |
| Bruchdehnung in % | 34 | 34 |
| Scherfestigkeit in N/cm² | 6 | 7 |
| Druckspannung bei 10 % Verformung in N/cm² | 5,8 | 6,7 |

Darüber hinaus war der Schrumpf des Schaumes nach Klimaverlagerung (40°C/90 % relative Feuchte) sehr gering.

| Schrumpf des Schaumes nach Beispiel 1 | |
|---|---|
| Pistolenaustrag | Winkelstückaustrag |
| - 1,46 % | - 1,75 % |

Die Schäume nach Ausführungsbeispiel 1 waren außerdem kältestabil, d.h. sie zeigten bei Verarbeitungstemperaturen von ca. 5°C keinerlei Versprödungserscheinungen.
Der Schaum besaß die Brandklasse B2 nach DIN 4102.

### Beispiel 2

2.1 Herstellung des urethan-/oxazolidonmodifizierten Isocyanats
In einem Rührreaktor mit Heiz- und Kühleinrichtung sowie Temperaturmessvorrichtung wurden 94,8 kg eines Rohprodukts des Diphenylmethandiisocyanats eingefüllt. In einem separaten Mischbehälter wurden 6 kg eines Adipinsäure/Diethylenglykol/Polyesteralkohols mit einem Molekulargewicht von 450 g/mol (OH-Zahl 250 mg KOH/g) und 0,93 kg eines epoxidierten Polybutadiendiols mit einer OH-Zahl von 120 mg KOH/g vermischt. Die Mischung ergab eine stabile Emulsion der ansonsten nicht mischbaren Flüssigkeiten. 5,2 kg dieser Emulsion wurden bei laufendem Rührwerk dem Rohprodukt des Diphenylmethandiisocyanats zugesetzt und gründlich durchmischt. Danach wurde der Reaktorinhalt unter weiterem Rühren langsam auf ca. 80°C erwärmt. Nach Erreichung von 80°C wurde diese Temperatur ca. 2 h gehalten und das Reaktionsprodukt nachfolgend langsam auf Raumtemperatur abgekühlt. Das erhaltene urethan-/oxazolidonmodifizierte Isocyanat wies folgende Parameter auf:
- Isocyanatgehalt:: 28,5 % NCO
- Viskosität (25°C):: 370 mPa·s

2.2 Herstellung der Polyolkomponente
In einem Mischbehälter wurden nacheinander 3.400 g eines Umsetzungsproduktes aus einem Dicarbonsäuregemisch (Glutarsäure, Bernsteinsäure, Adipinsäure) und einem Polypropylenglykolpolyether mit dem Molekulargewicht 450 g/mol und der OH-Zahl 50 mg KOH/g, 300 g eines Polyetheralkohols auf Basis Saccharose/Pentaerythrit/Propylenoxid mit einer OH-Zahl von 410 mg KOH/g, 350 g eines Polyetheralkohols auf Basis Glyzerin/Propylenoxid/Ethylenoxid mit einer OH-Zahl von 35 mg KOH/g, 400 g eines Polyethylenglykols mit dem Molekulargewicht 600 g/mol, 325 g eines ethoxylierten Rizinusöls mit dem Molekulargewicht 4.200 g/mol (OH-Zahl 40 mg KOH/g), 125 g eines Siloxanoxyalkylen-Copolymeren als Schaumstabilisator, 40 g Dimorpholinodiethylether sowie 60 g Butandiol-1,4 eingewogen und durch nachfolgende gründliche Durchmischung zu einer Polyolkomponente homogenisiert.
2.3 Herstellung des Prepolymers in Aerosoldosen mit Universalventil
245 g der oben beschriebenen Polyolkomponente wurden in eine 1-l-Aerosoldose eingefüllt. Nach Zugabe von 380 g des urethan-/oxazolidonmodifizierten Rohprodukts des Diphenylmethandiisocyanats gemäß 2.1 wurde die Aerosoldose mit einem Universalventil verschlossen. Sofort nach dem Verschließen wurden durch das Ventil mittels einer Gasdosiervorrichtung nacheinander 44 g Dimethylether, 36 g Tetrafluorethan und 66 g eines aus 80 % Butan und 20 % Propan bestehenden Gasgemisches in die Aerosoldose gefüllt. Nach Dosierung jedes Einzelgases bzw. des Gasgemisches wurde der Inhalt der Aerosoldose durch intensives Schütteln homogenisiert. Nach 24 h Wärmelagerung bei 50°C war die Prepolymerreaktion soweit abgeschlossen, dass das Prepolymer zur Herstellung des Einkomponenten-Polyurethanschaumes geeignet war.
2.4 Herstellung der Einkomponenten-Polyurethanschäume
Aus den oben beschriebenen Aerosoldosen wurden die Prepolymere zum einen mittels Pistole und zum anderen mittels Winkelstück ausgetragen. Dies geschah durch Montage der Aerosoldose auf die jeweilige Austragsvorrichtung. Die ausgetragenen Prepolymere zeigten sehr gute Frothwirkung und härteten mit der Luftfeuchtigkeit bzw. Feuchtigkeit aus dem Untergrund zu einem jeweils sehr gut in seiner Oberflächenbeschaffenheit strukturierten Schaum mit dünner Schäumhaut und sehr feiner Schaumzelle aus. Der ausgehärtete Einkomponentenschaum zeigte gute mechanische Eigenschaften, wie nachfolgende Tabelle veranschaulicht.

| | Schäume nach Beispiel 2 | |
|---|---|---|
| | Pistolenaustrag | Winkelstückaustrag |
| Dichte in kg/m³ | 15 | 16 |
| Zugfestigkeit in N/cm² | 9,5 | 11 |
| Bruchdehnung in % | 32 | 28 |
| Scherfestigkeit in N/cm² | 6 | 7 |
| Druckspannung bei 10 % Verformung in N/cm² | 5,6 | 6,2 |

Darüber hinaus war der Schrumpf des Schaumes nach Klimaverlagerung (40°C/90 % relative Feuchte) sehr gering.

| Schrumpf des Schaumes nach Beispiel 2 | |
|---|---|
| Pistolenaustrag | Winkelstückaustrag |
| - 1,15 % | - 1,28 % |

Die Schäume nach Ausführungsbeispiel 2 waren außerdem kältestabil, d.h. sie zeigten bei Verarbeitungstemperaturen von ca. 5°C keinerlei Versprödungserscheinungen.

## Patentansprüche

1. Oxazolidon- und Urethangruppen enthaltendes, unter Druck stehendes, Treibmittel enthaltendes isocyanatterminiertes Prepolymer, herstellbar durch Umsetzung einer Isocyanatkomponente (A) mit einer Polyolkomponente (B), dadurch gekennzeichnet, dass als Isocyanatkomponente (A) ein endständige Isocyanatgruppen enthaltendes Reaktionsprodukt aus mindestens einem Isocyanat mit mindestens zwei Isocyanatgruppen im Molekül mit einem Gemisch aus mindestens einer Verbindung mit mindestens zwei mit Isocyanat reaktiven funktionellen Gruppen und mindestens einer Epoxidgruppe im Molekül und einem Polyesterpolyol und als Polyolkomponente (B) mindestens ein mit primären Hydroxylgruppen terminierter Polyether mit einer Funktionalität ≥2 eingesetzt wird.

2. Isocyanatterminiertes Prepolymer nach Anspruch 1, dadurch gekennzeichnet, dass die Verbindung mit mindestens zwei mit Isocyanat reaktiven funktionellen Gruppen und mindestens einer Epoxidgruppe im Molekül ein Epoxidgruppen enthaltendes Polyol ist.

3. Isocyanatterminiertes Prepolymer nach Anspruch 2, dadurch gekennzeichnet, dass das Epoxidgruppen enthaltende Polyol ein epoxidiertes Polybutadiendiol ist.

4. Isocyanatterminiertes Prepolymer nach Anspruch 3, dadurch gekennzeichnet, dass das epoxidierte Polybutadiendiol ein Molekulargewicht (Gewichtsmittel) von 600 bis 4.000 g/mol aufweist.

5. Isocyanatterminiertes Prepolymer nach Anspruch 1, dadurch gekennzeichnet, dass das Polyesterpolyol ein Reaktionsprodukt aus einem Diol und einer Dicarbonsäure ist.

6. Isocyanatterminiertes Prepolymer nach Anspruch 1, dadurch gekennzeichnet, dass das Polyesterpolyol ein Reaktionsprodukt aus Diethylenglykol und Adipinsäure ist.

7. Isocyanatterminiertes Prepolymer nach Anspruch 1, dadurch gekennzeichnet, dass das Polyesterpolyol ein Molekinlargewicht (Gewichtsmittel) von 100 bis 2.000 g/mol aufweist.

8. Isocyanatterminiertes Prepolymer nach Anspruch 1, dadurch gekennzeichnet, dass das Gewichtsverhältnis des Epoxidgruppen enthaltenden Polyols zum Polyesterpolyol 100:1 bis 1:100 beträgt.

9. Isocyanatterminiertes Prepolymer nach Anspruch 1, dadurch gekennzeichnet, dass das Gewichtsverhältnis des Epoxidgruppen enthaltenden Polyols zum Polyesterpolyol 50:1 bis 1:5 beträgt.

10. Isocyanatterminiertes Prepolymer nach Anspruch 1, dadurch gekennzeichnet, dass als Isocyanat ein Gemisch aus Diphenylmethandiisocyanat und Polyphenylen-polymethylen-polyisocyanaten eingesetzt wird.

11. Isocyanatterminiertes Prepolymer nach Anspruch 1, dadurch gekennzeichnet, dass zur Herstellung der Isocyanatkomponente (A) das Gemisch aus mindestens einer Verbindung mit mindestens zwei mit Isocyanat reaktiven funktionellen Gruppen und mindestens einer Epoxidgruppe im Molekül in einer Menge von 0,1 bis 20 Gew.-%, bezogen auf das Isocyanat mit mindestens zwei Isocyanatgruppen im Molekül, eingesetzt wird.

12. Isocyanatterminiertes Prepolymer nach Anspruch 1, dadurch gekennzeichnet, dass zur Herstellung der Isocyanatkomponente (A) das Gemisch aus mindestens einer Verbindung mit mindestens zwei mit Isocyanat reaktiven funktionellen Gruppen und mindestens einer Epoxidgruppe im Molekül in einer Menge von 2 bis 10 Gew.-%, bezogen auf das Isocyanat mit mindestens zwei Isocyanatgruppen im Molekül, eingesetzt wird.

13. Isocyanatterminiertes Prepolymer nach Anspruch 1, dadurch gekennzeichnet, daß als mit primären Hydroxylgruppen terminierter Polyether mit einer Funktionalität ≥2 ein Polyethylenglykol verwendet wird.

14. Isocyanatterminiertes Prepolymer nach Anspruch 13, dadurch gekennzeichnet, daß das Polyethylenglykol ein Molekulargewicht (Gewichtsmittel) von <1.000 g/mol aufweist.

15. Isocyanatterminiertes Prepolymer nach Anspruch 13 oder 14, dadurch gekennzeichnet, daß das Polyethylenglykol ein Molekulargewicht von 3.000 bis 20.000 g/mol aufweist.

16. Isocyanatterminiertes Prepolymer nach Anspruch 1, dadurch gekennzeichnet, daß als mit primären Hydroxylgruppen terminierter Polyether ein alkoxylierter Fettsäureester verwendet wird.

17. Isocyanatterminiertes Prepolymer nach Anspruch 16, dadurch gekennzeichnet, dass als alkoxylierter Fettsäureester alkoxyliertes Rizinusöl verwendet wird.

18. Isocyanatterminiertes Prepolymer nach Anspruch 17, dadurch gekennzeichnet, dass als alkoxylierter Fettsäureester ethoxyliertes Rizinusöl verwendet wird.

19. Isocyanatterminiertes Prepolymer nach Anspruch 18, dadurch gekennzeichnet, dass das ethoxylierte Rizinusöl ein Molekulargewicht (Gewichtsmittel) von >1.500 g/mol aufweist.

20. Isocyanatterminiertes Prepolymer nach Anspruch 1, dadurch gekennzeichnet, dass das Gewichtsverhältnis von Polyolkomponente zu Isocyanatkomponente 100:>140 beträgt.

21. Isocyanatterminiertes Prepolymer nach Anspruch 1, dadurch gekennzeichnet, dass die Treibmittel einen Siedepunkt von <50°C aufweisen.

22. Isocyanatterminiertes Prepolymer nach Anspruch 20, dadurch gekennzeichnet, dass als Treibmittel Alkane verwendet werden.

23. Isocyanatterminiertes Prepolymer nach Anspruch 20, dadurch gekennzeichnet, daß als Treibmittel Gemische aus Alkanen, fluorialen Alkanen und Dimethylether verwendet werden.

24. Verfahren zur Herstellung eines Oxazolidin- und Urethangruppen enthaltenden, unter Druck stehenden, Treibmittel enthaltenden isocyanatterminierten Prepolymers nach Anspruch 1, dadurch gekennzeichnet, dass ein Isocyanat mit mindestens zwei Isocyanatgruppen im Molekül mit einem Gemisch aus mindestens einer Verbindung mit mindestens zwei mit Isocyanat reaktiven funktionellen Gruppen und mindestens einer Epoxidgruppe im Molekül und einem Polyesterpolyol umgesetzt und dieses Umsetzungsprodukt mit mindestens einem mit primären Hydroxylgruppen terminierten Polyether B umgesetzt wird.

25. Verfahren nach Anspruch 24, dadurch gekennzeichnet, dass die Umsetzung des Isocyanats mit dem Gemisch aus mindestens einer Verbindung mit mindestens zwei mit Isocyanat reaktiven funktionellen Gruppen und mindestens einer Epoxidgruppe im Molekül und einem Polyesterpolyol zur Komponente A bei Temperaturen zwischen 60°C und 110°C durchgeführt wird.

26. Verfahren zur Herstellung eines Einkomponenten-Polyurethanschaums, dadurch gekennzeichnet, dass ein Oxazolidon- und Urethangruppen enthaltendes, unter Druck stehendes, Treibmittel enthaltendes isocyanatterminiertes Prepolymer nach Anspruch 1 entspannt, durch Frothwirkung aufgeschäumt und unter dem Einfluß von Luftfeuchtigkeit ausgehärtet wird.

27. Einkomponenten-Polyurethanschaum, herstellbar nach Anspruch 26.
